Europäisches Patentamt

(19) European Patent Office

Office européen des brevets

(11) Publication number: **0 453 233 A2**

# (12) EUROPEAN PATENT APPLICATION

(21) Application number: **91303366.8**

(22) Date of filing: **16.04.91**

(51) Int. Cl.⁵: **G02B 6/16**

(30) Priority: **20.04.90 US 511619**

(43) Date of publication of application:
**23.10.91 Bulletin 91/43**

(84) Designated Contracting States:
**DE FR GB IT SE**

(71) Applicant: **Hughes Aircraft Company**
**7200 Hughes Terrace P.O. Box 45066**
**Los Angeles, California 90045-0066 (US)**

(72) Inventor: **Vali, Victor**
**26035 Moulton Parkway**
**Laguna Hills, California 92653 (US)**

(74) Representative: **Colgan, Stephen James et al**
**CARPMAELS & RANSFORD 43 Bloomsbury**
**Square**
**London WC1A 2RA (GB)**

(54) Eccentric core optical fiber.

(57) An eccentric core optical fiber 10 having a cross-sectional area sufficiently large to afford ease of manipulation, yet deposed to operate in an evanescent mode, is disclosed herein. The inventive optical fiber 10 includes a fiber core 20 of a first index of refraction. The fiber core 20 circumscribes a first longitudinal axis. The optical fiber 10 of the present invention further includes fiber cladding material 30 of a second index of refraction chosen to be less than the first index of refraction. The cladding material 30 circumscribes both a fiber core 20 and a second longitudinal axis oriented parallel to but not coincident with the first longitudinal axis.

Fig. 1.

EP 0 453 233 A2

## BACKGROUND OF THE INVENTION

Field of the Invention:

This invention relates to optical fibers. More specifically, this invention relates to optical fibers intended for use in a device which makes use of the evanescent wave:

While the present invention is described herein with reference to a particular embodiment, it is understood that the invention is not limited thereto. Those having ordinary skill in the art and access to the teachings provided herein will recognize additional embodiments within the scope thereof.

Description of the Related Art:

In conventional fiber optic sensors light guided within an optical fiber is modified in reaction to various external physical, chemical or similar influences. Light from a source is coupled into the fiber-and subsequently propagates to a region in which a measurement is to take place. In extrinsic sensors the guided light then may exit the fiber and interact with the substance being measured (measurand) prior to being relaunched into the same or a different fiber. Alternatively, in intrinsic sensors the light remains within the fiber throughout the measurement region.

In another type of optical fiber sensor, generally known as an evanescent wave sensor, the light guided by the fiber is partially conducted via the evanescent (i.e. exponentially decaying) wave which surrounds the core. In evanescent wave sensors a cladding sheath surrounds the optical fiber core creating a cladding-core interface such that an evanescent wave is supported by the cladding. The evanescent wave comprises a portion of the optical energy injected into the fiber which propagates along the length of the fiber within the cladding. The measurand surrounding the fiber may either absorb or change the properties of the evanescent wave, thus enabling a measurement to be performed. Employment of evanescent wave coupling into the measurand may be preferred over extrinsic mode fiber sensors in applications requiring direct interaction between the light beam and the measurand since the former approach requires no relaunching of the beam.

Unfortunately, the extremely small cross-sectional areas of fibers used in evanescent measuring devices generally render the fibers fragile and difficult to manipulate. While conventional optical fibers may have a standard cross-sectional diameter on the order of 120 µm, evanescent wave fibers often have a cross-sectional diameter of less than 15 µm. This small diameter arises as a consequence of the requirement that the cladding layer surrounding the core be sufficiently small to permit measurable coupling into the measurand.

Accordingly, a need in the art exists for an optical fiber which can be used to take advantage of the evanescent wave yet still have sufficient cross-sectional area to afford ease of manipulation.

## SUMMARY OF THE INVENTION

The need in the art for an optical fiber of sufficient cross-sectional area to allow ease of manipulation, yet disposed to operate using the evanescent mode, is addressed by the eccentric core fiber of the present invention. The optical fiber includes a fiber core of a first index of refraction. The fiber core circumscribes a first longitudinal axis. The optical fiber further includes a fiber cladding material of a second index of refraction chosen to be less than the first index of refraction. The cladding material circumscribes both the fiber core and a second longitudinal axis oriented parallel to the first longitudinal axis, but not coincident therewith.

## BRIEF DESCRIPTION OF THE DRAWINGS

Fig. 1 is a cross-sectional view of a preferred embodiment of the eccentric core fiber of the present invention.

Fig. 2 is an illustrative representation of the propagation of a light ray across the interface A separating the core and cladding of the inventive eccentric core fiber.

Fig. 3 is a diagrammatic representation of the light intensity distribution within the portions of the core and the cladding surrounding the interface A.

Fig. 4 is a schematic representation of a detection system disposed to sense the presence of a gaseous measurand $\tau$.

## DESCRIPTION OF THE INVENTION

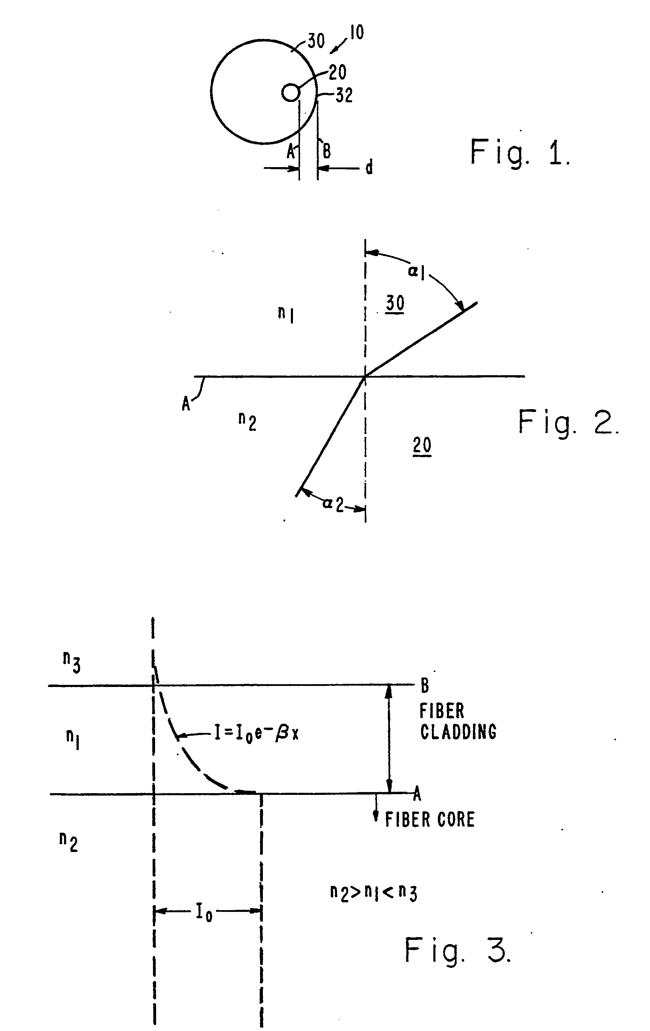

Fig. 1 is a cross-sectional view of a preferred embodiment of the eccentric core fiber 10 of the present invention. The fiber 10 includes a cylindrical fiber core 20 circumscribed by a cylindrical sheath of cladding material 30. The core 20 and the cladding 30 circumscribe parallel, non-coincident longitudinal axes (not shown). Accordingly, in the embodiment of Fig. 1 the minimum distance d between the exterior surface B of the cladding 30 and the interface A defined by the cladding 30 and core 20 remains constant throughout the fiber 10. However, in alternative embodiments of the fiber 10 it may be desired to vary the distance d along the length thereof. As is discussed more fully below, the distance d is adjusted such that a measurable portion of the evanescent wave supported by the fiber 10 extends through the distance d and penetrates the region of space external to the cladding 30 (e.g., a region occupied by a measurand). This feature of the fiber 10 allows a substance (measurand) immediately adjacent to the exterior surface B to interact with a portion of the fiber evanescent wave causing a loss of optical energy to the measurand and resulting in a measurable decrease in the intensity of optical energy flowing through the fiber core. In this manner the fiber 10 may be incorporated into an evanescent field sensor irrespective of the specific cross-sectional area of the cladding 30.

## Evanescent Wave Operation

As shown in Fig. 2, at the interface A of the cladding 30 and the core 20 having respective indices of refraction $n_1$ and $n_2$, a portion of the light incident at an angle $\alpha_2$ is refracted at an angle $\alpha_1$. By Snell's Law the angles $\alpha_1$, $\alpha_2$ and the indices of refraction satisfy the relationship:

$$\sin \alpha_2 2/\sin \alpha_1 = n_1/n_2 \quad [1]$$

When an optical beam propagates from the core 20 to the cladding 30 with $n_2$ chosen to be larger than $n_1$, there is a maximum angle $\alpha_2$ for which $\alpha_1$ becomes equal to 90 degrees. This is known as the angle of total internal reflection. Under this circumstance the entire beam is reflected back into the core 20. Nonetheless, in a thin layer of the cladding 30 immediately adjacent to the interface A there exists an exponentially decreasing intensity of light propagating parallel thereto. As is well known, the optical energy propagating within this thin layer in the cladding 30 is termed the evanescent wave.

The evanescent wave is always present at such an interface. The evanescent wave represents energy traveling parallel to the longitudinal axis of the core 20 and does not represent any loss of optical energy from the core. However, if a medium contacts the exterior of the cladding and has an index of refraction $n_3 > n_1$ (the index of refraction of the cladding) and if the cladding is sufficiently thin, then a measurable amount of energy will be coupled into the medium and result in a measurable loss of energy from the core 20.

Fig. 3 is a diagrammatic representation of the light intensity distribution within the portions of the core 20 and the cladding 30 surrounding the interface A. The intensity of the evanescent wave within the cladding 30 of refractive index $n_1$ is given (as a function of the distance x from the interface A) by:

$$I = I_o e^{-\beta x} \quad [2]$$

where the attenuation coefficient $\beta$ is (for a small glancing angle of $90 - \alpha_2$ degrees):

$$\begin{aligned} \beta &= 2\pi (n_2^2 - n_1^2)^{1/2}/\lambda \\ &= (2\pi/\lambda)(2n\Delta n)^{1/2} \end{aligned} \quad [3]$$

Here $\lambda$ is the wavelength of light and $\Delta n = n_2 - n_1$ ($n \approx n_1 \approx n_2$). Assuming an evanescent wave intensity of unity at the interface A, the reciprocal of $\beta$, is generally known as the penetration depth and is equivalent to the distance from the interface A at which the value of the evanescent wave falls to 1/e.

## Eccentric Fiber Design

On the basis of equations [2] and [3] the intensity of the exponential wave within the cladding 30 relative to the interface between the core 20 and cladding 30 may be determined. Specifically, the value of the evanescent wave at a point 32 on the surface of the cladding 30 separated from the core 20 by the minimum cladding thickness d (see Fig. 1) can be calculated. In order that part of the evanescent wave be enabled to exist external to the fiber 10 such that interaction with a measurand may occur, the distance d will generally be chosen to be between approximately 2 and 20 μm. The distance d chosen for a particular fiber will depend on the difference in the indices of refraction of the core 20 and cladding 30. In any event, the distance d must be sufficiently small to permit measurable coupling of the evanescent wave into the measurand.

The fiber 10 may be tailored for single or multi-mode operation. In single mode operation, the diameter of the core 20, and the relative refraction indices of the core 20 and cladding 30, are selected such that only a dominant mode propagates within the fiber 10. Those skilled in the art may recognize other techniques for adapting a particular fiber design for multi-mode operation. For example, multi-mode operation may be effected in certain instances by enlarging the diameter of the core 20 and increasing the difference in the respective indices of refraction of the core 20 and cladding 30.

In the embodiment of Fig. 1 the cladding 30 may be chosen to have a diameter of approximately 120 $\mu m$. to afford ease of manipulation. As was noted in the Background of the Invention, such small diameter fibers are generally unwieldy. The cladding may be realized from a variety of materials including silicon dioxide ($SiO_2$), which has an index of refraction of 1.45. The core 20 may be fabricated from silicon dioxide mixed with germanium oxide ($GeO_2$) in order to yield an index of refraction of 1.46.

If the fiber 10 is immersed in a medium such as air having a refractive index $n_3$ such that $n_2 > n_1 > n_3$, then substantially no losses due to absorption or leakage of the evanescent wave occur. In contrast, upon immersion of the fiber 10 in a measurand of refractive index $n_3'$ where $n_2 > n_1 < n_3'$, the "tail" of the evanescent wave propagating external to the cladding 30 is either absorbed or redirected by the measurand such that optical loss occurs. The rate of light loss from the fiber 10 may be adjusted by varying the minimum cladding thickness d (see Fig. 1). In this manner the inventive fiber 10 may be adapted for utilization in a variety of measurement and detection devices.

Typical of such devices using the evanescent wave are certain sensors such as disclosed in a copending application entitled Fiber Optic Fuel and Liquid Gauge, by V. Vali et al., filed February 23, 1990, serial number 484,295 and Fiber Optic Leak Detector by V. Vali et al., filed                    , serial number                    .

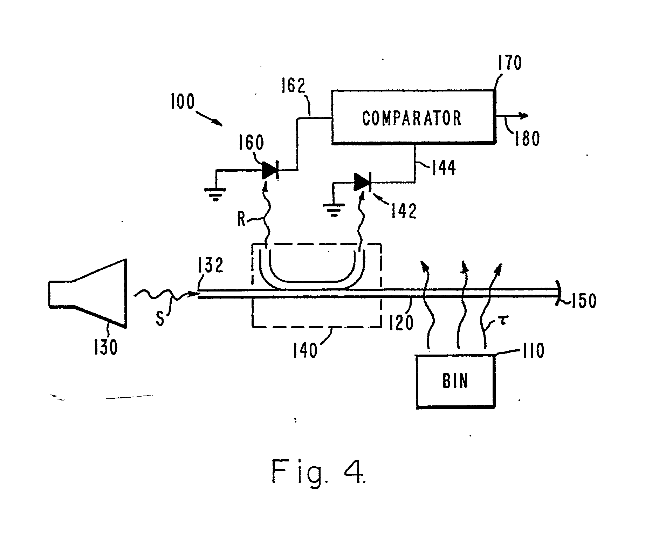

Fig. 4 is a schematic representation of one such detection system 100 disposed to sense the presence of a gaseous measurand $\tau$. In the embodiment of Fig. 4 the system 100 is situated in a closed room or laboratory which includes a storage bin 110. The bin 110 initially encloses the measurand $\tau$ which may, for example, constitute fumes from a toxic substance included therein. As is described below, the system 100 is adapted to detect concentrations of the measurand $\tau$ surrounding the inventive fiber 120 in excess of a predetermined level due to a leak or puncture of the container 110.

The system 100 includes the eccentric core fiber 120 of the present invention. The system 100 includes a laser source 130 for generating an optical beam S which is conventionally launched onto a first end 132 of the inventive fiber 120. A reflector 150 is provided at a second end of the fiber. A fiber optic beamsplitter 140 routes a portion of the light energy injected into the first end 132 to a first photodetector 142. A portion of the light reflected by the reflector 150 is also coupled by the beamsplitter 140 to a second photodetector 160. The first photodetector 142 transmits an electrical signal on a signal line 144 to a comparator 170 indicative of the intensity of the light energy initially coupled to the inventive fiber 120. The second photodetector 160 transmits an electrical signal on line 162 to the comparator 170 indicative of the intensity of the light reflected through the inventive fiber 120. The comparator circuit 170 compares the values of the electrical signals on the lines 144, 162 and thereby determines the optical loss occurring as a result of propagation through the fiber 120.

In the absence of a measurand immediately adjacent to the fiber 120 this optical loss is substantially zero. However, in the event of emission of the gaseous measurand $\tau$ from the container 110 the concentration thereof in the volume of space immediately adjacent to the fiber 120 will increase. The wavelength of optical energy from the source 130 is chosen such that the evanescent wave is absorbed by the gaseous measurand $\tau$. Accordingly, release of the measurand $\tau$ results in a decrease in the intensity of the beam R and a concomitant decrease in the signal level present on the line 162. In an illustrative application, in response to a sufficient drop in the magnitude of the signal carried by the line 162 relative to the signal on the line 144 the comparator 170 impresses a warning signal on an output line 180. The warning signal may thus be used to warn of the existence of the gaseous measurand $\tau$ in the vicinity of the fiber 120.

Fiber beamsplitters suitable for use as the beamsplitter 140 are commercially available; for example, the model F560B beamsplitter marketed by Newport Research Corporation, 18325 Mt. Baldy Circle, Fountain Valley, California 92728-8020, is suitable for the purpose.

Photodetectors suitable for use as photodetectors 142 and 160 are commercially available; for example, the model C30808 photodetector device marketed by RCA, 773 Donegal Business Center, P.O. Box 540, Mt. Joy, Pennsylvania 17552, is suitable for the purpose.

The laser light source 130 may comprise a semiconductor laser such as the model LB1-02 laser marketed by Stantel Components, Inc., 636 Remington Road, Schaumberg, Illinois 60173. Alternatively, other light sources may be used, such as an incandescent light bulb or light emitting diode (LED).

While the system 100 depicted in Fig. 4 involved a gaseous measurand the eccentric fiber of the present invention is equally well suited for utilization in measurement systems employed in liquid environments. For example, the inventive fiber could be utilized to monitor the purity of a solution. If the presence of a contaminant in the otherwise pure solution tended to lower the refractive index thereof, the index of refraction of the cladding would be chosen to be slightly less than that of the uncontaminated solution. Accordingly, when immersed in the pure solution the optical energy propagating through the inventive fiber would be subject to only minimal losses. The introduction of an impurity into the solution would then result in the refractive index of the solution becoming less than that of the fiber cladding, which would result in an elimination of the evanescent wave optical loss. The accompanying reduction increase in the intensity of the beam emerging from the inventive fiber would thus signal the presence of the contaminant in the solution.

Similarly, if the presence of a contaminant tended to raise the refractive index of the otherwise pure solution the index of refraction of the fiber cladding would be chosen to be slightly higher than that of the uncontaminated solution. Upon introduction of a sufficient concentration of the contaminant in the solution the refractive index thereof would become larger than that of the fiber cladding thereby inducing evanescent wave loss. The presence of the contaminant would thus be signaled by a decrease in the intensity of the beam emitted by the inventive fiber.

Thus the present invention has been described with reference to a particular embodiment in connection with a particular application. Those having ordinary skill in the art and access to the teachings of the present invention will recognize additional modifications and applications within the scope thereof. For example, the eccentric core fiber of the present invention is not limited to cylindrical fiber cores. Fiber cores of non-circular cross-section may be utilized without departing from the scope of the present invention. Similarly, it is not necessary that the fiber cladding be of circular cross-section. Other cladding shapes enabling the existence of an evanescent wave on at least a portion of the external surface thereof may be suitable for inclusion in the inventive fiber. Further, the applications of the inventive fiber are not limited to the detection apparatus described herein. Those skilled in the art may be aware of other measurement schemes in which the fiber of the present invention could be employed. It is therefore contemplated by the appended claims to cover any and all such modifications, applications and embodiments.

## Claims

1. An eccentric core optical fiber comprising:
   a fiber core of a first index of refraction circumscribing a first longitudinal axis; and
   fiber cladding material of a second index of refraction less than said first index of refraction, said material circumscribing said fiber core and a second longitudinal axis parallel to but not coincident with said first longitudinal axis.

2. The optical fiber of Claim 1 wherein said fiber core has a circular cross-section of a first diameter and said cladding material has a circular cross-section of a second diameter larger than said first diameter wherein the periphery of said fiber core defines a first interface and the periphery of said cladding material defines a second interface.

3. The optical fiber of Claim 2 wherein the minimum distance separating said first and second interfaces is less than the penetration depth of the evanescent wave supported by said optical fiber.

4. A fiber optic sensor for detecting the presence of a measurand immediately adjacent thereto comprising:
   an eccentric core optical fiber;
   light source means, optically coupled to said eccentric core fiber, for generating a beam of optical energy; and
   detector means, optically coupled to said eccentric core fiber, for detecting at least a portion of said beam and for generating an output signal in response thereto.

5. The sensor of Claim 4 wherein said eccentric core fiber includes:
   a fiber core of a first index of refraction circumscribing a first longitudinal axis;
   fiber cladding material of a second index of refraction less than said first index of refraction, said material circumscribing said fiber core and a second longitudinal axis parallel to said first longitudinal axis.

6. The sensor of Claim 5 wherein said fiber core has a circular cross-section of a first diameter and said cladding material has a circular cross-section of a second diameter larger than said first diameter wherein the periphery of said fiber core defines a first interface and the periphery of said cladding material defines a second interface.

7. The sensor of Claim 6 wherein said first and second axes are non-coincident and the minimum distance separating said first and second interfaces is less than the penetration depth of the evanescent wave supported by said optical fiber.

8. A fiber optic sensor for detecting the presence of a measurand of a known index of refraction immediately adjacent thereto comprising:

an eccentric core optical fiber having a first and a second end, said eccentric fiber including a fiber core of a first index of refraction circumscribing a first longitudinal axis and further including fiber cladding material of a second index of refraction less than said first index of refraction, said material circumscribing said fiber core and a second longitudinal axis parallel to said first longitudinal axis;

light source means, optically coupled to said eccentric core fiber, for launching a beam of optical energy onto said first end of said eccentric core optical fiber;

beamsplitter means, optically coupled to said optical fiber, for generating a first signal in response to the intensity of the beam launched onto said first end of said fiber;

detector means, optically coupled to said eccentric core fiber, for detecting the intensity of said beam emitted from the second end of said fiber and for generating a second signal in response thereto; and

comparator means for comparing said first and second signals and for generating a measurand detection signal in response thereto.

Fig. 1.

Fig. 2.

$I = I_0 e^{-\beta x}$

FIBER CLADDING

FIBER CORE

$n_2 > n_1 < n_3$

Fig. 3.

7

Fig. 4.